# EUROPEAN PATENT APPLICATION

(11) **EP 4 407 200 A1**
(43) Date of publication of application: **31.07.2024**
(21) Application number: 23154070.9
(22) Date of filing: 30.01.2023
(51) Int. Cl.: F16C 11/06, B60S 1/24

(54) **SEALING MEMBER FOR A MOTOR VEHICLE**

(71) Applicant: Valeo Systèmes d'Essuyage, 78322 Le Mesnil Saint Denis (FR)
(72) Inventor: CEBULA, Piotr, 32050 Skawina (PL); TOPOLSKI, Daniel, 32050 Skawina (PL)
(74) Representative: Valeo Visibility

(57) **Abstract**

The present invention relates to a sealing member (110) for a motor vehicle. The sealing member (110) comprises a body portion (115) comprising an upper section (120) and a lower section (130), which are joined together at a joining region (125). The upper section (120) and the lower section (130) converge towards the joining region (125) to define two opposite frustoconical sections with respect to the joining region (125). Further, the sealing member (110) comprises a separating member (135) comprising a central orifice (140) and a flat portion (145), which extends radially inwardly from the joining region (125) towards the central orifice (140), which has an axis coincides with axes of the upper and lower sections (120, 130). The separating member (135) is configured to separate the upper section (120) and the lower section (130) to define an upper cavity (120a) and a lower cavity (130a), respectively.

## Description

### TECHNICAL FIELD

The present invention relates to a windscreen wiper assembly of a motor vehicle. More particularly, the present invention relates to a sealing member for sealing a ball joint of the windscreen wiper assembly of the motor vehicle.

### STATE OF THE ART

**A** windscreen wiper assembly is generally used on motor vehicles to clean a windscreen of the vehicle. The windscreen wiper assembly comprises a drive unit and a wiper actuating linkage system, which transfers drive from a wiper motor of the drive unit to a pair of wiper arms, providing reciprocating movement of the wiper arms. Wiper blades are attached to the wiper arms for wiping the windscreen of the vehicle.

**Conventionally,** the wiper actuating linkage system comprises one or more link rods or connecting rods, one or more drive cranks, and one or more pivot assemblies. A connecting rod is articulated to a drive crank by means of a ball joint. Lubricants such as grease may be introduced inside the ball joint to keep the ball joint lubricated.

However, it has been found that the lubricant placed inside the ball joint may leak out from the ball joint over a period of time. Further, it may be also be possible that dust, water, moisture etc. may enter into the ball joint. This may result in weakening the connection between the connecting rod and the drive crank.

### SUMMARY OF THE INVENTION

An object of the present invention is to alleviate the problems raised by the prior arts. To be more precise, an object of the present invention is to provide a sealing member, which is configured to seal a ball joint and can prevent the penetration of water, dust, moisture etc. into a space enclosed by the sealing member.

Another object of the present invention is to provide a sealing member, which prevents the leakage of lubricant introduced inside the ball joint.

To achieve these objectives, there is provided in a first aspect a sealing member for a motor vehicle, wherein the sealing member comprises a body portion comprising an upper section and a lower section, the upper section and the lower section being joined together at a joining region, wherein the upper section and the lower section converge towards the joining region to define two opposite frustoconical sections with respect to the joining region; and a separating member comprising a central orifice having an axis coincident with the axes of the upper and lower sections, and a flat portion extending radially inwardly from the joining region towards the central orifice, wherein the separating member is configured to separate the upper section and the lower section to define an upper cavity and a lower cavity, respectively.

Advantageously, the sealing member of the present invention provides an improved sealing effect to prevent the leakage of the lubricant from a ball joint that is being sealed by the sealing member. Further, the sealing member of the present invention prevents the penetration of the dust, water, moisture etc. into the ball joint.

According to one characteristic of the present invention, the sealing member further comprises an O-ring disposed at the border of the flat portion and the central orifice, and the O-ring being formed integrally with the separating member. Advantageously, the O-ring facilitates to create a tight seal against a neck portion of a ball portion of the ball joint.

According to one characteristic of the present invention, the upper and lower sections are annular sections, the upper section comprising a first annular wall extending axially between the joining region and a first outer annular face, and the lower section comprising a second annular wall extending axially between the joining region and a second outer annular face. In one example, the upper section and the lower section are annular symmetrical sections.

Advantageously, by having symmetrical upper and lower sections, detection of parts either by sensor or by a visual system can be avoided during the assembly. Further, as the upper and lower sections are symmetrical, the sealing member can be mounted in either directions i.e., in upside-down and downside-up directions. Thus, the sealing member can be installed easily on the drive crank of the windscreen wiper assembly.

According to one characteristic of the present invention, the first annular wall and the second annular wall are inclined with respect to the joining region to define an angle 'α' with one another.

According to one characteristic of the present invention, the angle 'α' is greater than 180 degrees. That is to say, the first annular wall and the second annular wall are inclined towards an interior of the sealing member. This gives a degree of flexibility to the sealing memeber that accommodates the relative motion between the drive crank and the connecting rod without the sealing member being damaged.

According to one characteristic of the present invention, the upper section defines a first frustoconical section and the lower section defines a second frustoconical section, wherein the diameters of the first frustoconical section and the second frustoconical section increase with increasing distance from the joining region.

According to one characteristic of the present invention, the separating member is a flexible member.

According to one characteristic of the present invention, the body portion is generally cylindrical shaped. Advantageously, by fabricating the body portion of generally cylindrical shaped, the amount of material to fabricate the body portion is reduced.

According to one characteristic of the present invention, the sealing member is produced by injection molding.

According to one characteristic of the present invention, the sealing member is fabricated from one of a rubber-elastic material, and a thermoplastic elastomer. It is to be noted that the material for fabrication of the sealing member is selected so that it has sufficient abrasion resistance along with sufficient elasticity.

Advantageously, the sealing member allows a relative movement between the drive crank and the connecting rod.

According to one characteristic of the present invention, the sealing member is produced as a single piece.

The present invention also relates in a second aspect to a ball joint for a motor vehicle, in particular for a windscreen wiper device, comprising a ball stud configured to be fixed to a second transmission member such that a ball portion of the ball stud projects out from a first face of the first transmission member; a socket member configured to be fixed to a first transmission member, the socket member comprising a housing with an internal cavity, an open end, and a closed end opposite to the open end, the internal cavity being configured to receive the ball portion; and a sealing member comprising an upper section and a lower section as discussed above.

According to one characteristic of the present invention, the first transmission member and the second transmission member are a connecting rod and a drive crank of a wiper linkage system of the windscreen wiper device, respectively.

According to one characteristic of the present invention, the upper section is configured to abut against the first transmission member proximate to the open end of the socket member, and the lower section is configured to abut against the first face of the second transmission member, when the ball stud, the socket member, and the sealing member are assembled together.

According to one characteristic of the present invention, the ball portion comprises a neck portion, the O-ring of the sealing member surrounding the neck portion when the ball stud, the socket member, and the sealing member are assembled together.

Advantageously, this arrangement of the sealing member with respect to the ball portion helps in holding the sealing member firmly in a position without coming out from an assembled position. This facilitates transporting the crank assembled with the sealing member, and the connecting rod as separate components. In addition, the separate member that is configured to contact with the neck portion of the ball portion has an effect of centering the sealing member on the ball joint.

According to one characteristic of the present invention, the sealing member is configured to hold lubricant in at least one of its upper cavity and lower cavity.

The present invention also relates in a third aspect to a wiper linkage system of a windscreen wiper assembly for a motor vehicle, the wiper linkage system comprises: at least one connecting rod, at least one crank, and the ball joint as has just been presented to join the at least one connecting rod and the at least one crank.

The present invention also relates in a fourth aspect to a method for assembling a connecting rod (101) and a drive crank (102) of a wiper linkage system, the method comprising the steps of providing the drive crank (102) fixed with a ball stud (105a) such that a ball portion (107) of the ball stud (105a) projects out from a first face (102a) of the drive crank (102); assembling a sealing member (110) as claimed in any one of claims 1 to 10 with the drive crank (102), such that a lower section (130) of the sealing member (110) abuts against the first face (102a) of the drive crank (102) and a neck portion (155) of the ball portion (107) surrounds an O-ring (155) of the sealing member (110); providing the connecting rod (101) fixed with a socket member (105b) having an internal cavity, an open end, and a closed end opposite to the open end; and assembling the connecting rod (101) with the drive crank (102) by positioning the socket member (105b) on the ball portion (107) such that the ball portion (107) is received inside the internal cavity, the upper section (120) of the sealing member (110) abuts against the connecting rod (101) proximate to the open end of the socket member (105b), and the lower section (130) of the sealing member (110) abuts against the first face (102a) of the drive crank (102).

Further advantages, features and details of the invention will be apparent from the following description of preferred embodiments of the invention and from the drawings.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1 shows a perspective view of a first transmission member of a windscreen wiper assembly articulated to a second transmission member by a ball joint, according to an embodiment of the present invention.
Fig.2a shows a perspective view of a sealing member for sealing a ball joint of the windscreen wiper assembly, according to an embodiment of the present invention.
Fig.2b shows a top view of the sealing member shown in Fig.2a, according to an embodiment of the present invention.
Fig.2c shows a sectional view of the sealing member shown in Fig.2a, according to an embodiment of the present invention.
Fig.3 shows a sectional view of a ball joint sealed by the sealing member shown in Fig.2a, according to an embodiment of the present invention.

### DETAILED DESCRIPTION OF THE INVENTION

The description set forth below in connection with the appended drawings is intended as a description of various embodiments of the disclosed subject matter and is not necessarily intended to represent the only embodiment(s). In certain instances, the description includes specific details for the purpose of providing an understanding of the disclosed subject matter. However, it will be apparent to those skilled in the art that embodiments may be practiced without these specific details. In some instances, well known structures and components may be shown in block diagram form in order to avoid obscuring the concepts of the disclosed subject matter.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or " in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

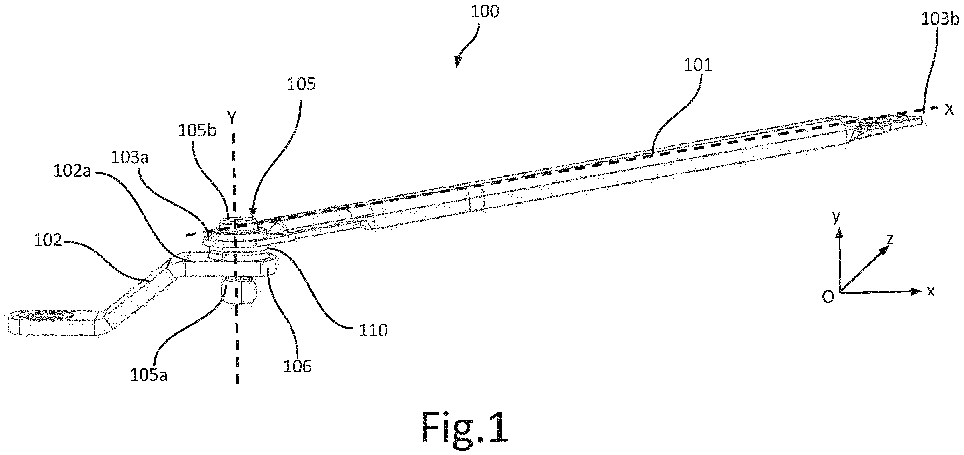

In the following description, the longitudinal, vertical or transverse denominations refer to the orientation of a connecting rod of a windscreen wiper assembly. The longitudinal direction corresponds to a direction of longitudinal extension of the connecting rod, this longitudinal direction being parallel to an axis Ox of an orthonormal reference, for example represented in Fig.1. The transverse direction corresponds to a direction parallel to an Oy axis of this orthonormal frame, the axis Oy being perpendicular to the axis Ox. A vertical direction corresponds to a direction parallel to an axis Oz of the orthonormal coordinate system, the axis Oz being perpendicular to the axis Ox and the axis Oy.

A windscreen wiper assembly (not shown in Figures) is generally used in motor vehicles to clean a windscreen of the motor vehicles. The windscreen wiper assembly comprises a drive unit and a wiper linkage system, which transfers drive from a wiper motor of the drive unit to a pair of wiper arms providing reciprocating movement of the wiper arms. Wiper blades are attached to the wiper arms for wiping a windscreen of the vehicle. The wiper blades are placed in abutment with the windscreen, such that the wiper blades are capable of wiping the windscreen.

**The** wiper linkage system is provided for moving the wiper arms between an in-wipe position (at a lower end of the wiper's travel), an out-wipe position (at an upper end of the wiper's travel) and a parked position. The wiper linkage system comprises one or more connecting rods transferring a drive from the wiper motor to one or more driving cranks, the first ends of which are fixed to the one or more connecting rods.

For instance, a connecting rod may be fixed to an end of a drive crank by a ball joint. The one or more connecting rods are be driven by the wiper motor to perform a reciprocating linear movement. The reciprocating linear movement of the one or more connecting rods is transferred into a reciprocating movement of the one or more drive cranks. The one or more drive cranks rotate about rotational axes of respective pivot shafts to which they are fixed to. Then, a drive is transferred via the pivot shafts into a reciprocating movement of the wiper arms, thereby performing cleaning of the windscreen.

The present invention is directed to a sealing member, which is configured to seal the ball joint of the connection between the connecting rod and the drive crank of the wiper linkage system. The sealing member of the present invention will thus prevent the penetration of water, dust, moisture etc. into a space enclosed by the sealing member. Further, the sealing member of the present invention is configured to prevent the leakage of a lubricant introduced inside the ball joint.

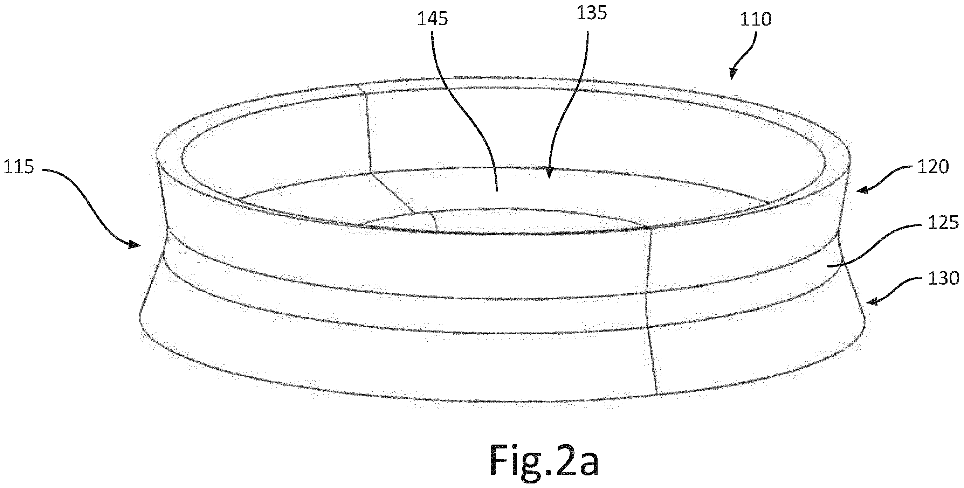

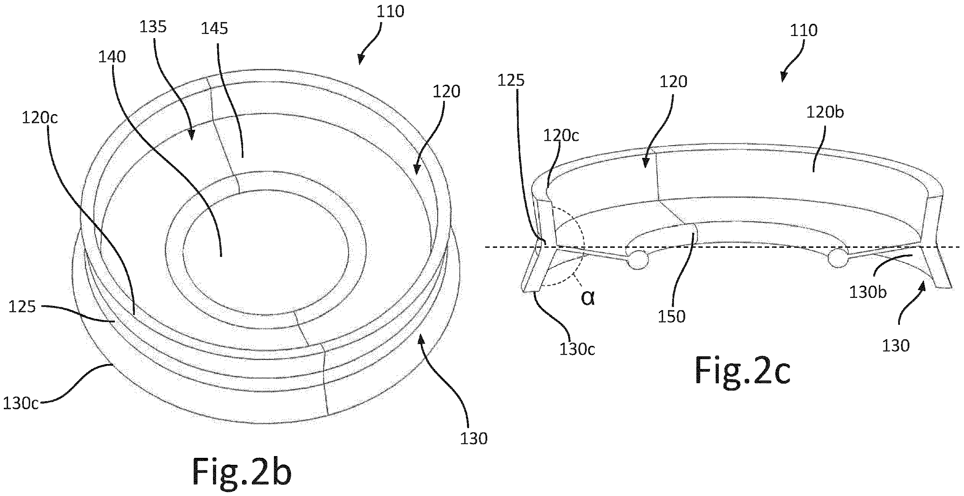

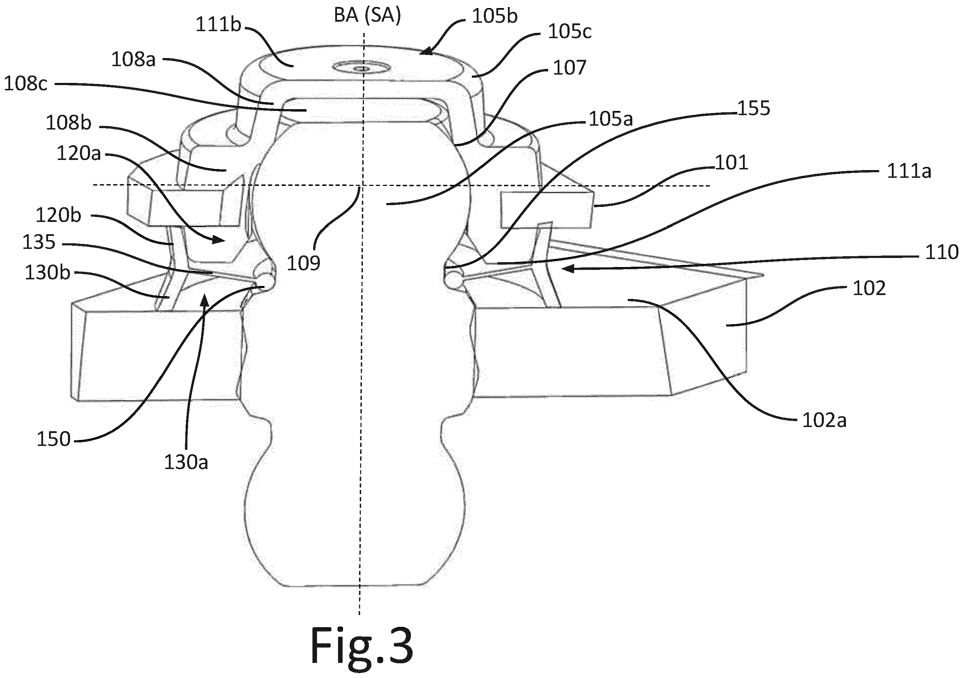

Fig.1 shows a perspective view of a first transmission member of a windscreen wiper assembly articulated to a second transmission member by a ball joint, according to an embodiment of the present invention. Fig.2a shows a perspective view of a sealing member for sealing a ball joint of the windscreen wiper assembly, according to an embodiment of the present invention. Fig.2b shows a top view of the sealing member shown in Fig.2a, according to an embodiment of the present invention. Fig.2c shows a sectional view of the sealing member shown in Fig.2a, according to an embodiment of the present invention. Fig.3 shows a sectional view of a ball joint sealed by the sealing member shown in Fig.2a, according to an embodiment of the present invention.

Fig.1 illustrates a portion of the wiper linkage system 100 of the windscreen wiper assembly. In particular, Fig.1 illustrates a first transmission member 101 of the windscreen wiper assembly articulated to a second transmission member 102 by a ball joint 105. For example, the first transmission member is a connecting rod of the wiper linkage system and the second transmission member is a drive crank of the wiper linkage system.

As can be seen from Fig.1, the first transmission member 101 extending along a longitudinal axis X between a first longitudinal end 103a and a second longitudinal end 103b. The two transmission members, i.e., the connecting rod 101 and the drive crank 102 are articulated to one another via a ball joint 105. In particular, a first end 106 of the drive crank 102 is articulated to the first longitudinal end 103a of the connecting rod 101 by means of the ball joint 105. As can be seen from Fig.1, the ball joint 105 is arranged along an axis Y, which is perpendicular to the longitudinal axis X.

The ball joint 105 comprises a ball stud 105a and a socket member 105b (clearly shown in Fig.3). The ball stud 105a may have one or more ball portions 107 (shown in Fig.3). The one or more ball portions 107 may be made of metal, for example, preferably made of steel and fastened in a suitable manner, for example, by riveting, to the drive crank 102 so that a ball portion 107 having a ball axis BA (shown in Fig.3) projects beyond a first face 102a of the drive crank 102. Further, the socket member 105b may be placed on the ball portion 107.

The socket member 105b, for example made of plastic by injection molding, consists of a housing 105c having an internal cavity 108c with an open end 111a, and a closed end 111b opposite to the open end 111a. For instance, the housing 105c comprises an upper, hood like or hat-like section 108a and an essential annular section 108b with which the socket member 105b is anchored in a bore of the connecting rod 101. In the illustration in Fig.3, SA denotes an axis of the socket member 105b axis, which lies coaxially with the axis BA. Both axes SA and BA also go through the center 109 (Shown in Fig.3).

The socket member 105b is configured to cooperate with the ball portion 107 of the ball stud to receive the ball portion 107 inside the internal cavity 108c of the socket member 105b. The open end 111a of the socket member 105b is delimited by an annular surface, and this lies in a plane perpendicular to the axis SA and is spaced from the first face 102a of the drive crank 102. In one example, the connecting rod 101 fastened with the socket member 105b is snapped onto the ball stud 105a fixed on the drive crank 102 to engage the socket member 105b with the ball stud 105a, thereby forming the ball joint 105. Further, the ball joint 105 may be filled with lubricant so as to reduce friction in the ball joint 105.

According to an embodiment of the present invention, a sealing member 110 (shown in Fig.1, Fig.2a, Fig.2b, Fig.2c and Fig.3) is provided, and the sealing member 110 is disposed between the connecting rod 101 and the drive crank 102 along the axes BA and SA. The sealing member 110 is configured to seal the ball joint 105 by bridging the distance between the connecting rod 101 and the drive crank 102 in the direction along the axis Y, which is perpendicular to the longitudinal axis X of the connecting rod 101. The sealing member 110 is configured to seal the ball joint 105 against environmental influences.

As illustrated in Fig.2a, Fig.2b and Fig.2c, the sealing member 110 comprises a body portion 115 comprising an upper section 120 and a lower section 130, which are produced in one piece with one another. In one aspect, the body portion 115 is generally cylindrical shaped. The upper section 120 and the lower section 130 are joined together at a joining region 125. Further, as illustrated in Fig.2a, the upper section 120 and the lower section 130 converge towards the joining region 125 to define two opposite frustoconical sections with respect to the joining region 125. The upper section 120 defines a first frustoconical section and the lower section 130 defines a second frustoconical section, and diameters of the first frustoconical section and the second frustoconical section increases with increasing distance from the joining region 125. The formation of the sealing member 110 with two sections 120, 130 ensures that even with larger forces acting on the sealing member 110 from the outside, the sealing member 110 remains fully functional.

The sealing member 110 further comprises a separating member 135 comprising a central orifice 140 and a flat portion 145. In an aspect, the separating member 135 is a flexible member. The flat portion 145 extends radially inwardly from the joining region 125 towards the central orifice 140, which has an axis coinciding with axes of the upper and lower sections 120, 130. The separating member 135 is configured to separate the upper section 120 and the lower section 130 to define an upper cavity 120a and a lower cavity 130a, respectively. In an aspect, the sealing member 110 further comprises an O-ring 150 disposed at the border of the flat portion 145 and the central orifice 140, and the O-ring 150 being formed integrally with the separating member 110.

In one aspect, the upper and lower sections 120, 130 are annular sections. The upper section 120 comprises a first annular wall 120b extending axially between the joining region 125 and a first outer annular face 120c, along the axis Y, and the lower section 130 comprises a second annular wall 130b extending axially between the joining region 125 and a second outer annular face 130c, along the axis Y. In one example, dimensions of the first annular wall 120b the second annular wall 130b are substantially same.

By way of example, the height and thickness dimensions of the first annular wall 120b and the second annular wall 130b are substantially the same. Further, an angle of inclination of the first annular wall 120b with respect to the joining region 125 is substantially the same as an angle of inclination of the second annular wall 130b with respect to the joining region 125. That is to say, the upper and lower sections 120, 130 are symmetrical sections.

Advantageously, by having symmetrical upper and lower sections 120, 130, detection of parts either by sensor or by a visual system can be avoided during the assembly process. Further, as the upper and lower sections 120, 130 are symmetrical, the sealing member 110 can be mounted in either directions i.e., in upside down and downside up directions. Thus, the sealing member 110 can be installed easily on the drive crank 102 of the windscreen wiper assembly.

The first annular wall 120b and the second annular wall 130b are inclined with respect to the joining region 125 and define an angle 'α' with one another. In one instance, the angle 'α' is greater than 180 degrees. That is to say, the first annular wall 120b and/or the second annular wall 130b are inclined towards an interior of the sealing member 110. This gives a degree of flexibility that accommodates the motion where the drive crank 102 and the connecting rod 101 are inclined relative to each other, without the sealing member 110 being damaged.

In one example, the first annular wall 120b is a straight wall and the second annular wall 130b is inclined with respect to the joining region 125 to define the angle greater than 180 degrees with one another. In another example, the second annular wall 130b is a straight wall and the first annular wall 120b is inclined with respect to the joining region 125 to define the angle greater than 180 degrees with one another. In yet another example, both the first annular wall 120b and the second annular wall 130b are inclined with respect to the joining region.

The sealing member 110 is firmly positioned between the connecting rod 101 and the drive crank 102, in such a way that it can hold lubricant in at least one of the upper cavity 120a and the lower cavity 130a. In one example, the sealing member 110 is configured to hold the lubricant in the upper cavity 120a. In another example, the sealing member 110 is configured to hold the lubricant in the lower cavity 130a.

In an aspect, the sealing member 110 is produced by injection molding as a single piece. Further, the sealing member 110 is fabricated from one of a rubber-elastic material, and a thermoplastic elastomer. It is to be noted that the material for fabrication of the sealing member 110 is selected so that it has sufficient abrasion resistance with sufficient elasticity. Advantageously, the sealing member 110 would allow a relative movement between the drive crank 102and the connecting rod 101.

As can be seen from Fig.3, the upper section 120 of the sealing member 110 abuts against the connecting rod 101 proximate to the open end 111a of the socket member 105b. Further, the lower section 130 is configured to abut against the first face 102a of the drive crank 102, when the ball stud 105a, the socket member 105b, and the sealing member 110 are assembled together. In particular, the first outer annular face 120c (shown in Fig.2c) of the upper section 120b abuts against the connecting rod 101 proximate to the open end 111a of the socket member 105b, and the second outer annular face 130c (shown in Fig.2c) of the lower section 130 abuts against the first face 102a of the drive crank 102.

**Thus,** the upper and the lower cavities 120a, 130a are formed, separated by the separating member 135. The first annular wall 120b and the second annular wall 130b of the sealing member 110 prevents the leakage of the lubricant introduced inside the ball joint 105. Further, the first annular wall 120b and the second annular wall 130b of the sealing member 110 prevents the penetration of water, dust, moisture etc. into a space enclosed by the sealing member 110.

Further, the ball portion 107 comprises a neck portion 155 (shown in Fig.3), and the O-ring 150 of the sealing member 110 is configured to surround the neck portion 115 when the ball stud 105a, the socket member 105b, and the sealing member 110 are assembled together. During the assembly, the sealing member 110 may be pressed over the ball portion 107 to fix the sealing member 110 with the ball stud fastened to the drive crank 102, the O-ring 150 of the sealing member 110 surrounding the neck portion 155 and thereby holding the sealing member 110 firmly in place.

Advantageously, the O-ring 150 facilitates to create a tight seal against the neck portion 155 of the ball portion 107 of the ball joint 105. This helps to prevent the passage of the lubricant from the upper cavity 120a to the lower cavity 130a, and vice versa. Further, the separating member 135 of the sealing member 110 facilitates centering the sealing member 110 on the ball joint 105 without using any additional tools.

In an exemplary embodiment of the present invention, the ball joint 105 may be designed as a double ball joint in which two ball portions may project out from the first face 102a of the drive crank 102, and these two ball portions may cooperate with two socket members in order to form the double ball joint. Further, in this configuration, two sealing members may be employed to seal respective ball joints of the double ball joint.

The present invention is not limited to the double ball joint. It is understood by a person skilled in the art that single or multiple ball joints can be employed; accordingly, single or multiple sealing members may be employed to seal the multiple ball joints.

According to another embodiment, the present invention relates to a method for assembling the connecting rod 101 and the drive crank 102 of a wiper linkage system, the method comprising the steps of: providing the drive crank 102 fastened with the ball stud 105a such that the ball portion 107 of the ball stud 105a projects out from the first face 102a of the drive crank 102.

The method further comprises assembling the sealing member 110 with the drive crank 102 such that the lower section 130 of the sealing member 110 abuts against the first face 102a of the drive crank 102, and the neck portion 155 of the ball portion 107 is surrounded by the O-ring 150 of the sealing member 110. Next, the method comprising the step of providing the connecting rod 101 fixed with the socket member 105b having a housing 105c with an internal cavity 108c.

Furthermore, the method comprises assembling the connecting rod 101 with the drive crank 102 by positioning the socket member 105b on the ball portion 107 so that the ball portion 107 is received inside the internal cavity 108c, and the upper section 120 of the sealing member 110 abuts against the connecting rod 101 proximate to the open end 111a of the socket member 105b, and the lower section 130 abuts against the first face 102a of the drive crank 102b.

The person skilled in the art realizes that the present invention by no means is limited to the preferred embodiments described above. On the contrary, many modifications and variations are possible within the scope of the appended claims. In addition, the skilled person readily realizes that the different embodiments described herein may be combined freely to obtain new combinations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot also be used to advantageous effect.

### LIST OF REFERENCE SIGNS

- 100: Portion of wiper linkage system
- 101: Connecting rod
- 102: Drive crank
- 102a: First face of the drive crank
- 103a: First longitudinal end of the connecting rod.
- 103b: Second longitudinal end of the connecting rod.
- 105: Ball joint
- 105a: Ball stud
- 105b: Socket member
- 105c: Housing of the socket member
- 107: Ball portion
- 108a: Hat-like portion
- 108b: Annular section
- 108c: Internal cavity
- 110: Sealing member
- 111a: Open end of the housing of the socket member
- 111b: Closed end of the housing of the socket member
- 115: Body portion of the sealing member
- 120: Upper section of the sealing member
- 120a: Upper cavity
- 120b: First annular wall
- 120c: First outer annular face
- 130: Lower section of the sealing member
- 130a: Lower cavity
- 130b: Second annular wall
- 130c: second outer annular face
- 125: Joining region
- 135: Separating member
- 140: Central orifice
- 145: Flat portion
- 150: O-ring
- 155: Neck portion

## Claims

1. A sealing member (110) for a motor vehicle, wherein the sealing member (110) comprises:
a body portion (115) comprising an upper section (120) and a lower section (130), the upper section (120) and the lower section (130) being joined together at a joining region (125),
wherein the upper section (120) and the lower section (130) converge towards the joining region (125) to define two opposite frustoconical sections with respect to the joining region (125); and
a separating member (135) comprising a central orifice (140) having an axis coincident with the axes of the upper and lower sections (120, 130), and a flat portion (145),extending radially inwardly from the joining region (125) towards the central orifice (140);
wherein the separating member (135) is configured to separate the upper section (120) and the lower section (130) so as to define an upper cavity (120a) and a lower cavity (130a).

2. The sealing member (110) as claimed in claim 1, wherein the sealing member (110) further comprises an O-ring (150) disposed at the border of the flat portion (145) and the central orifice (140), the O-ring (150) being formed integrally with the separating member (135).

3. The sealing member (110) as claimed in claim 1, wherein the upper and lower sections (120, 130) are annular sections, the upper section (120) comprising a first annular wall (120b) extending axially between the joining region (125) and a first outer annular face (120c), and the lower section (130) comprising a second annular wall (130b) extending axially between the joining region (125) and a second outer annular face (130c).

4. The sealing member (110) as claimed in claim 3, wherein the first annular wall (120b) and the second annular wall (130b) are inclined with respect to the joining region (125) to define an angle 'α' with one another.

5. The sealing member (110) as claimed in claim 4, wherein the angle 'α' is greater than 180 degrees.

6. The sealing member (110) as claimed in any one of preceding claims, wherein the upper section (120) defines a first frustoconical section and the lower section (130) defines a second frustoconical section, wherein diameters of the first frustoconical section and the second frustoconical section increase with increasing distance from the joining region (125).

7. The sealing member (110) as claimed in any of the preceding claims, wherein the separating member (135) is a flexible member.

8. The sealing member (110) as claimed in any one of preceding claims, wherein the sealing member (110) is produced by injection molding.

9. The sealing member (110) as claimed in any one of the preceding claims, wherein the sealing member (110) is fabricated from one of a rubber-elastic material, and a thermoplastic elastomer.

10. The sealing member (110) as claimed in any one of preceding claims, wherein the sealing member (110) is produced as a single piece.

11. A ball joint (105) for a motor vehicle, in particular for a windscreen wiper device, the ball joint (105) comprising:
a ball stud (105a) configured to be fixed to a second transmission member (102) such that a ball portion (107) of the ball stud (105) projects out from a first face (102a) of the first transmission member (102);
a socket member (105b) configured to be fixed to a first transmission member (101), the socket member (105b) comprising a housing with an internal cavity, an open end, and a closed end opposite to the open end, the internal cavity being configured to receive the ball portion (107); and
a sealing member (110) as claimed in any one of the preceding claims.

12. The ball joint (105) as claimed in claim 12, wherein the first transmission member (102) and the second transmission member (101) are a connecting rod and a drive crank of a wiper linkage system of the windscreen wiper device, respectively.

13. The ball joint (105) as claimed in any one of claims 12 to 13, wherein the upper section (120) is configured to abut against the first transmission member (101) proximate to the open end of the socket member (105b), and the lower section (130) is configured to abut against the first face (102a) of the second transmission member (102), when the ball stud (105a), the socket member (105b), and the sealing member (110) are assembled together.

14. The ball joint (105) as claimed in any one of claims 12 to 14 in conjunction with claim 2, wherein the ball portion (107) comprises a neck portion (155), the O-ring (150) of the sealing member (110) surrounding the neck portion (155) when the ball stud (105a), the socket member (105b), and the sealing member (110) are assembled together.

15. A wiper linkage system of a windscreen wiper assembly for a motor vehicle, the wiper linkage system comprising at least one connecting rod (101), at least one drive crank (102), and at least one ball joint (105) as claimed in any of claims 12 to 16.
